# EUROPEAN PATENT APPLICATION

(11) **EP 4 668 290 A1**
(43) Date of publication of application: **24.12.2025**
(21) Application number: 24887527.0
(22) Date of filing: 12.08.2024
(51) Int. Cl.: H01B 7/14, H01B 3/44, C08L 23/08

(54) **SUBMARINE CABLE, AND PREPARATION METHOD THEREFOR AND USE THEREOF**

(30) Priority: 09.11.2023 CN 202311486890
(71) Applicant: Zhongtian Technology Submarine Cable Co., Ltd., Jiangsu 226000 (CN); South Sea Submarine Cable Co., Ltd., Shanwei, Guangdong 516545 (CN); Zhongtian Dafeng Submarine Cable Co., Ltd., Jiangsu 224145 (CN)
(72) Inventor: NIE, Ying, Nantong, Jiangsu 226000 (CN); HU, Ming, Nantong, Jiangsu 226000 (CN); WANG, Liyuan, Nantong, Jiangsu 226000 (CN); WANG, Wenchao, Nantong, Jiangsu 226000 (CN); WANG, Haiyang, Nantong, Jiangsu 226000 (CN); ZHAO, Youlin, Nantong, Jiangsu 226000 (CN); ZHANG, Shuo, Nantong, Jiangsu 226000 (CN); SUN, Yanyu, Nantong, Jiangsu 226000 (CN); DU, Qiang, Nantong, Jiangsu 226000 (CN); LIU, Lei, Nantong, Jiangsu 226000 (CN); XIE, Shuhong, Nantong, Jiangsu 226000 (CN); ZHU, Jinghua, Nantong, Jiangsu 226000 (CN); CAO, Kai, Nantong, Jiangsu 226000 (CN); QIAO, Jing, Nantong, Jiangsu 226000 (CN)
(74) Representative: J A Kemp LLP
(86) International application number: PCT/CN2024/111550
(87) International publication number: WO 2025/097907

(57) **Abstract**

A submarine cable and a preparation method and application thereof are provided. The submarine cable includes an insulation layer, and the material of the insulation layer includes polyethylene, a vulcanizing agent and an antioxidant, where the vulcanizing agent is dicumyl peroxide, the antioxidant is pentaerythritol tetraester, and a mass ratio of the polyethylene, the vulcanizing agent and the antioxidant is 100: (0.8-2.5): (0.1-0.4). An insulation material is prepared by using the specific vulcanizing agent and antioxidant, and compared with conventional insulation materials in the prior art, its operating temperature is increased from 90°C to 105°C, thereby significantly enhancing the reliability, stability and transmission capacity of the submarine cable.

## Description

The present application claims priority to Chinese Patent Application No. 202311486890.7, entitled with "SUBMARINE CABLE AND PREPARATION METHOD AND APPLICATION THEREOF", and filed with the China National Intellectual Property Administration on November 09, 2023, which is hereby incorporated by reference in its entirety.

### TECHNICAL FIELD

The present application relates to the technical field of communication facilities and, in particular, to a submarine cable and a preparation method and application thereof.

### BACKGROUND

Submarine cable is a kind of communication system that connects two locations via optical or electrical cables laid on the seabed, which is mainly used to achieve long-distance communication across oceans and straits. Submarine cable is an important component of modern communication technology, which is of great significance for advancing global informatization progress and promoting regional economic development.

Submarine cables typically consist of a variety of components, including cable core, coating, insulation material, outer sheath, connectors, plugs, terminal device, etc. The cable core is the central component, which is a core material wound by multiple strands of copper wires or optical fibers and responsible for signal transmission. The cable core is coated with the coating or the insulation material, preventing the cable core from being in contact with seawater to cause short circuit or data loss. The outer sheath is used to protect the cables, enabling them to withstand the harsh conditions of the subsea environment. The connectors and plugs are necessary components of the cables for linking the cables to devices. The terminal device is used to convert signals from the submarine cables into understandable information and to perform related processing.

Currently, cross-linked polyethylene is widely used as the primary component of the insulation layer of submarine cables. For cables insulated with cross-linked polyethylene, the long-term maximum allowable operating temperature is 90 °C. According to IEC Standard 60216-1 by the International Electrotechnical Commission (IEC), the recommended short-time overload temperature for cross-linked polyethylene is 130 °C, with an operational time not exceeding 100 hours at this temperature. The ultimate temperature is 160°C, with an operational time not exceeding 50 hours, and its thermal lifespan may reach 40 years. Since the current-carrying capacity of submarine cables is directly related to the maximum operating temperature of conductors, the long-term thermal resistance of insulation material limits the transmission capacity of submarine cables to a certain extent. As the demand for the transmission capacity of submarine cables continues to increase, higher requirements are put forward for the maximum heat-resistance temperature of submarine cable insulation.

### SUMMARY

In order to solve the issues existing in the prior art, the present application provides a submarine cable and a preparation method and application thereof. According to the present application, an insulation layer material with a significantly increased operating temperature is prepared through specific vulcanizing agent and antioxidant, significantly increasing the capacity of submarine cables.

In a first aspect, the present application provides an insulation material, including: polyethylene, a vulcanizing agent, and an antioxidant; where the vulcanizing agent is dicumyl peroxide; the antioxidant is pentaerythritol tetraester; and a mass ratio of the polyethylene, the vulcanizing agent and the antioxidant is (100): (0.8-2.5): (0.1-0.4).

Optionally, a mass ratio of the polyethylene, the vulcanizing agent and the antioxidant is (100): (1.3-1.9): (0.15-0.31).

The maximum long-term operating temperature of conventional cross-linked polyethylene insulation materials in the prior art is only 90 °C, which affects the current that can be carried by the submarine cable, and then affects the current-carrying capacity.

The present application provides a cross-linked polyethylene insulation material prepared from specific vulcanizing agent and antioxidant, and the long-term operating temperature of this insulation material is increased to above 105 °C. Meanwhile, this material before aging exhibits the following performances: a tensile strength ≥ 17 Mpa, an elongation at break ≥ 500%, a volume resistivity (23 °C) ≥ 1.0 × 10¹⁶ Ω•m, a dielectric constant ≤ 2.3-2.35, a dielectric loss-angle tangent tgδ ∈ (0.0005, 0.001), a short-time power frequency breakdown strength (23 °C) ≥ 40kV/mm, and a melt flow rate (190 °C/2.16 kg) being between 0.7-1.1. Optionally, when the melt flow rate is 0.95, the performance is better.

In addition, the content of the vulcanizing agent significantly affects the insulation performances of the cross-linked polyethylene. If the content is too low, it cannot meet the production efficiency requirements for material cross-linking, which results in insufficient cross-linking degree, thereby affecting the mechanical and temperature-resistance performances. If the content is too high, the material may be over cross-linked and the yield of crosslinking by-products may increase, which is not conducive to product quality control.

The content of the antioxidant significantly affects the electrical, thermal and mechanical performances of insulation. Meanwhile, the mechanism of the antioxidant is to scavenge the active free radicals in the polymer, so it also significantly affects the crosslinking reaction of the material.

Optionally, the polyethylene is low-density polyethylene, and a mass percentage content of the polyethylene in the insulation material is 80-95%.

Optionally, the antioxidant is pentaerythritol tetraester 1010 or pentaerythritol tetraester 1035.

Optionally, the insulation material further includes an anti-scorching agent and a plasticizer.

Optionally, the anti-scorching agent includes one or more of benzoic acid, phthalic anhydride or N-cyclohexylthiophthalimide; and the plasticizer includes one or more of 2-naphthalenethiol, dimethylthiophenol or pentachlorothiophenol.

Optionally, the insulation material includes, based on the parts by weight, 100 parts by weight of the polyethylene, 0.8-2.5 parts by weight of the vulcanizing agent, 0.1-0.4 parts by weight of the antioxidant, 0.4-1.2 parts by weight of the anti-scorching agent and 0.8-2 parts by weight of the plasticizer.

In a second aspect, the present application provides a submarine cable, including an optical fiber unit and a conductor, where the optical fiber unit is coated with the conductor.

Meanwhile, when the current optical-fiber composite submarine cable is in normal operation, the optical fiber unit is generally placed within the filling gaps of the outer cabling layer, making it impossible to accurately measure its operating temperature, which may have an adverse impact on the later operation and maintenance detection of the submarine cable. However, according to the present application, the optical fiber unit is provided at a position coated by a conductor, so that the operating temperature of the submarine cable can be accurately measured through the optical fiber, facilitating the precise location of fault positions.

Optionally, the conductor includes an inner-layer conductor and an outer-layer conductor, and the outer-layer conductor is one or more of a trapezoidal stranded-conductor, a SZ-type stranded-conductor or a segmented stranded-conductor.

Optionally, the raw material of the conductor includes one or more of copper, tinned copper, aluminum, or an aluminum alloy.

Optionally, the submarine cable further includes a cooling device.

According to the present application, a cooling pipeline is further provided in the submarine cable and may be disposed in a filling layer for reducing temperature after the operating temperature exceeds a certain threshold value, preventing over-temperature.

Optionally, the insulation layer in the submarine cable is prepared from the insulation material.

Optionally, a conductor shield layer, an insulation layer, an insulation shield layer, a waterproof layer, a metallic shield layer and a non-metallic sheath layer are provided outside the conductor in sequence in the submarine cable.

Optionally, in the submarine cable, after a wire core is stranded with the filling layer, a wrapping-tape layer, an inner cushion layer, an armoring layer and an outer cladding layer are coated outside the wire core in sequence.

Optionally, the conductor shield layer and the insulation shield layer are each made of ethylene-vinyl acetate copolymer added with carbon black, and a heat-resistant vulcanizing agent is added in the preparation process.

Optionally, the conductor shield layer, the insulation layer and the insulation shield layer are prepared by a three-layer co-extrusion method, and the specific process is as follows:
preheating the temperature of the conductor core to 70-120°C, and extruding the conductor shield layer, the insulation layer and the insulation shield layer sequentially by the three-layer co-extrusion method.

Optionally, the waterproof layer is a semiconductor waterproof tape.

Optionally, the metallic shield layer includes one or more of an alloy lead sleeve, a copper strip, a copper wire and a copper pipe.

Optionally, the submarine cable further includes a cooling device, and the cooling device is provided between filling material.

Optionally, the cooling device is a cooling liquid pipe, an inert gas cooling pipe, or a magnetic cooling device.

The working principle of the liquid cooling pipeline is as follows: when the temperature is higher than 70°C, the cooling liquid device is triggered to work, and the cooling liquid may be water, mineral oil, fluorinated electronic coolant, etc. The inert gas is nitrogen or carbon dioxide. The magnetic cooling device adopts a technology for refrigerating a material by using magnetic fields, where the temperature of the material is reduced by reducing the internal thermal energy of the material, and the cooling principle of the magnetic cooling device is a Coupled Entropy Change Effect (MCE), that is, when the magnetic field is applied to the material, the thermodynamic characteristics of the material itself will change, so that the thermodynamic entropy of the material is changed. When the armoring material in the submarine cable is magnetic armoring material, the effect is better.

In summary, the configuration of the optical fiber unit and the cooling device provided by the present application may reflect the temperature of the optical fiber unit in a very timely manner, thereby effectively ameliorating the problem of current-carrying capacity reduction caused by cable overheating.

Optionally, the wrapping tape is a gummed cotton tape or an eco-friendly cotton tape.

Optionally, the material of the inner cushion layer is polypropylene.

Optionally, the material of the armoring layer includes one or more of a galvanized steel wire, a hard-drawn copper wire, a stainless steel wire, or an aluminum alloy wire.

Optionally, the material of the outer cladding layer is polypropylene.

The application further provides an application of the submarine cable in improving an accuracy of fault location or an accuracy of operating temperature detection.

The present application has the following beneficial effects.

According to the present application, the existing insulation layer materials are modified by adopting specific vulcanizing agent and antioxidant, so as to obtain an insulation material with a significantly increased operating temperature. Compared with the existing operating temperature of 90 °C, the operating temperature is increased to above 105°C. The insulation layer material provided by the present application has higher operating temperature, thereby substantially improving the current that can be carried by the submarine cable, improving the capacity and service life of the submarine cable, and having higher economic value.

### BRIEF DESCRIPTION OF DRAWINGS

FIG. 1 is a schematic diagram of the overall structure of a submarine cable according to Embodiment 2 of the present application.
FIG. 2 is a schematic diagram of a first optical fiber unit structure according to Embodiment 2 of the present application.
FIG. 3 is a schematic diagram of a second optical fiber unit structure according to Embodiment 2 of the present application.
FIG. 4 is a schematic diagram of a third optical fiber unit structure according to Embodiment 2 of the present application.

### Reference numerals:

1: optical fiber unit; 2: waterproof conductor; 21: inner-layer compacted round conductor; 201: outer-layer T-shaped conductor; 202: outer-layer SZ-type conductor; 203: outer-layer segmented conductor; 3: conductor shield layer; 4: insulation layer; 5: insulation shield layer; 6: waterproof layer; 7: metallic shield layer; 8: non-metallic sheath layer; 9: cooling device; 10: filling layer; 11: wrapping tape layer; 12: inner cushion layer; 13: armoring layer; 14: outer cladding layer.

### DESCRIPTION OF EMBODIMENTS

### Embodiment 1

This embodiment provides an insulation material, including the following components:
100 parts of low-density polyethylene, 0.8-2.5 parts of vulcanizing agent, 0.1-0.4 parts of antioxidant, 0.4-1.2 parts of antiscorching agent and 0.8-2 parts of plasticizer.

The preparation method of the insulation material is as follows.

Polyethylene mixture formed by the low-density polyethylene, the vulcanizing agent, the antioxidant, the antiscorching agent, the plasticizer and the like at a proportion is hot-pressed and then vulcanized, to prepare a cross-linked polyethylene insulation layer material.

According to the above method, various insulation materials obtained in this embodiment are as follows:
insulation material 1-1: 100 parts of low-density polyethylene, 1.0 part of vulcanizing agent, 0.1 parts of antioxidant, 0.8 parts of antiscorching agent and 0.8 parts of plasticizer;
insulation material 1-2: 100 parts of low-density polyethylene, 1.8 parts of vulcanizing agent, 0.1 parts of antioxidant, 0.8 parts of antiscorching agent and 0.8 parts of plasticizer;
insulation material 1-3: 100 parts of low-density polyethylene, 2.5 parts of vulcanizing agent, 0.1 parts of antioxidant, 0.8 parts of antiscorching agent and 0.8 parts of plasticizer;
comparative material 1-4: 100 parts of low-density polyethylene, 2.8 parts of vulcanizing agent, 0.1 parts of antioxidant, 0.8 parts of antiscorching agent and 0.8 parts of plasticizer;
in the above various materials, the vulcanizing agent is dicumyl peroxide (dicumyl peroxide, DCP); the antioxidant is pentaerythritol tetraester 1035; the antiscorching agent is N-cyclohexylthiophthalimide (N-cyclohexylthiophthalimide, CTP); and the plasticizer is 2-naphthalenethiol.

Comparative material 1-5: 100 parts of low-density polyethylene, 1.8 parts of vulcanizing agent, 0.1 parts of antioxidant, 0.8 parts of antiscorching agent and 0.8 parts of plasticizer;
where, the vulcanizing agent is dibenzoyl peroxide (dibenzoyl peroxide, BPO); the antioxidant is pentaerythritol tetraester 1035; the antiscorching agent is N-cyclohexylthiophthalimide; and the plasticizer is 2-naphthalenethiol.

Insulation material 2-1: 100 parts of low-density polyethylene, 1.8 parts of vulcanizing agent, 0.2 parts of antioxidant, 0.8 parts of antiscorching agent and 0.8 parts of plasticizer;
insulation material 2-2: 100 parts of low-density polyethylene, 1.8 parts of vulcanizing agent, 0.3 parts of antioxidant, 0.8 parts of antiscorching agent and 0.8 parts of plasticizer;
insulation material 2-3: 100 parts of low-density polyethylene, 1.8 parts of vulcanizing agent, 0.4 parts of antioxidant, 0.8 parts of antiscorching agent and 0.8 parts of plasticizer;
comparative material 2-4: 100 parts of low-density polyethylene, 1.8 parts of vulcanizing agent, 0.5 parts of antioxidant, 0.8 parts of antiscorching agent and 0.8 parts of plasticizer;
where, the vulcanizing agent is dicumyl peroxide DCP; the antioxidant is pentaerythritol tetraester 1035; the antiscorching agent is N-cyclohexylthiophthalimide; and the plasticizer is 2-naphthalenethiol.

Comparative material 2-5: 100 parts of low-density polyethylene, 1.8 parts of vulcanizing agent, 0.3 parts of antioxidant, 0.8 parts of antiscorching agent and 0.8 parts of plasticizer;
where, the vulcanizing agent is dicumyl peroxide DCP; the antioxidant is pentaerythritol tetraester 1035; the antiscorching agent is phthalic anhydride; and the plasticizer is pentachlorothiophenol.

Insulation material 3-1: 100 parts of low-density polyethylene, 1.8 parts of vulcanizing agent, 0.3 parts of antioxidant, 0.4 parts of antiscorching agent and 0.8 parts of plasticizer;
insulation material 3-2: 100 parts of low-density polyethylene, 1.8 parts of vulcanizing agent, 0.3 parts of antioxidant, 1.0 part of antiscorching agent and 0.8 parts of plasticizer;
insulation material 3-3: 100 parts of low-density polyethylene, 1.8 parts of vulcanizing agent, 0.3 parts of antioxidant, 1.2 parts of antiscorching agent and 0.8 parts of plasticizer;
comparative materials 3-4: 100 parts of low-density polyethylene, 1.8 parts of vulcanizing agent, 0.3 parts of antioxidant, 1.6 parts of antiscorching agent and 0.8 parts of plasticizer;
where, the vulcanizing agent is dicumyl peroxide (dicumyl peroxide, DCP); the antioxidant is pentaerythritol tetraester 1035; the antiscorching agent is N-cyclohexylthiophthalimide; and the plasticizer is 2-naphthalenethiol.

Insulation material 4-1: 100 parts of low-density polyethylene, 1.8 parts of vulcanizing agent, 0.3 parts of antioxidant, 1.0 part of antiscorching agent and 1.0 part of plasticizer;
insulation material 4-2: 100 parts of low-density polyethylene, 1.8 parts of vulcanizing agent, 0.3 parts of antioxidant, 1.0 part of antiscorching agent and 1.5 parts of plasticizer;
insulation material 4-3: 100 parts of low-density polyethylene, 1.8 parts of vulcanizing agent, 0.3 parts of antioxidant, 1.0 part of antiscorching agent and 2.0 parts of plasticizer;
comparative material 4-4: 100 parts of low-density polyethylene, 1.8 parts of vulcanizing agent, 0.3 parts of antioxidant, 1.0 part of antiscorching agent and 2.5 parts of plasticizer;
where, the vulcanizing agent is dicumyl peroxide DCP; the antioxidant is pentaerythritol tetraester 1035; the antiscorching agent is N-cyclohexylthiophthalimide; and the plasticizer is 2-naphthalenethiol.

Insulation material 5: 100 parts of low-density polyethylene, 1.8 parts of vulcanizing agent, 0.3 parts of antioxidant, 1.0 part of antiscorching agent and 1.5 parts of plasticizer.

Where, the vulcanizing agent is dicumyl peroxide DCP; the antioxidant is pentaerythritol tetraester 1010; the antiscorching agent is N-cyclohexylthiophthalimide; and the plasticizer is 2-naphthalenethiol.

In this embodiment, the above insulation materials and the materials of control group are subjected to thermal elongation test. The test is conducted according to Standard GB/T 2951.11-2008 for sample preparation: the length of the test samples prepared is 100mm; the thickness of the dumbbell-shaped test piece is not less than 0.8mm and not more than 2.0mm; and mark lines L0 with an interval of 20mm are marked in the middle of each test sample. After completing the sample preparation, the thermal elongation test is carried out according to the aforementioned standard, and the results are shown in the following table:

**Table 1: Results of thermal elongation tests for different insulation materials and control groups**

| Tested objects | Low-density polyethy lene (part) | Heat-resistant vulcanizi ng agent (part) | Antiox idant (part) | Antiscorchi ng agent (part) | Plasticizer (part) | Deformation rate under load%/ Permanent deformation rate% |
|---|---|---|---|---|---|---|
| Insulation material 1-1 | 100 | 1 | 0.1 (1035) | 0.8 | 0.8 | 84% / 8% |
| Insulation material 1-2 | 100 | 1.8 | 0.1 (1035) | 0.8 | 0.8 | 65% / 7% |
| Insulation material 1-3 | 100 | 2.5 | 0.1 (1035) | 0.8 | 0.8 | 77% / 9% |
| Comparative material 1-4 | 100 | 2.8 | 0.1 (1035) | 0.8 | 0.8 | 103% / 15% |
| Comparative material 1-5 | 100 | 1.8 (BPO) | 0.1 (1035) | 0.8 | 0.8 | 115% / 15% |
| Insulation material 2-1 | 100 | 1.8 | 0.2 (1035) | 0.8 | 0.8 | 66% / 7% |
| Insulation material 2-2 | 100 | 1.8 | 0.3 (1035) | 0.8 | 0.8 | 58% / 6% |
| Insulation material 2-3 | 100 | 1.8 | 0.4 (1035) | 0.8 | 0.8 | 69% / -7% |
| Comparative material 2-4 | 100 | 1.8 | 0.5 (1035) | 0.8 | 0.8 | 93% / 11% |
| Comparative material 2-5 | 100 | 1.8 | 0.3 (1035) | 0.8 (phthalic anhydride) | 0.8 (pentachlorot hiophenol) | 72% / 10% |
| Insulation material 3-1 | 100 | 1.8 | 0.3 (1035) | 0.4 | 0.8 | 72% / 8% |
| Insulation material 3-2 | 100 | 1.8 | 0.3 (1035) | 1.0 | 0.8 | 55% / 5% |
| Insulation material 3-3 | 100 | 1.8 | 0.3 (1035) | 1.2 | 0.8 | 65% / 7% |
| Comparative material 3-4 | 100 | 1.8 | 0.3 (1035) | 1.6 | 0.8 | 77% / 18% |
| Insulation material 4-1 | 100 | 1.8 | 0.3 (1035) | 1.0 | 1.0 | 58% / 5% |
| Insulation material 4-2 | 100 | 1.8 | 0.3 (1035) | 1.0 | 1.5 | 42% / 3% |
| Insulation material 4-3 | 100 | 1.8 | 0.3 (1035) | 1.0 | 2.0 | 58% / 6% |
| Comparative material 4-4 | 100 | 1.8 | 0.3 (1035) | 1.0 | 2.5 | 58% / 19% |
| Insulation material 5 | 100 | 1.8 | 0.3 (1010) | 1.0 | 1.5 | 45% / 7% |

It can be seen from the test results in Table 1 that the elongation rate of thermal elongation of the insulation material 4-2 is significantly optimized compared with the insulation materials from other groups. The insulation material 5 of the control group with replaced the antioxidant meets the requirements of the relevant standard for cross-linked polyethylene insulated submarine cables, but its thermal elongation performance is slightly inferior to that of the insulation material 4-2. Therefore, the insulation material 4-2 is an insulation material that exhibits significantly superior performances in terms of toughness, flexibility and thermal resistance.

### Embodiment 2

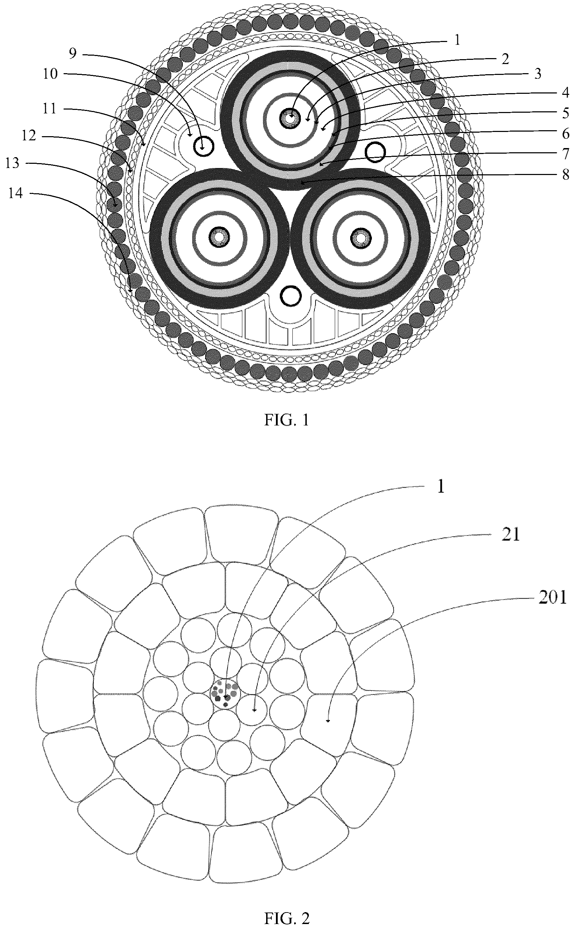

This embodiment provides a submarine cable, the specific structure of which is shown in FIG. 1.

Where, an optical fiber unit 1 serves as a central line within a waterproof conductor 2. The optical fiber unit 1 may be a type of optical fiber units commonly used in the art, such as a single mode fiber, a multimode fiber, or a hybrid of the two. An extruded protective sheath is provided outside the optical fiber unit 1, and optionally has a thickness of 0.5-1mm.

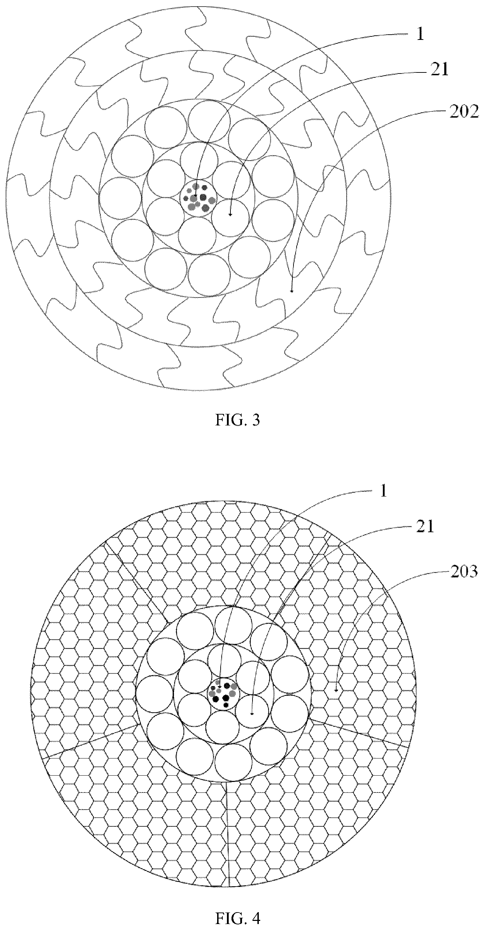

The waterproof conductor 2 is located at the outer layer of the optical fiber unit 1, and may be one of a waterproof glue, a waterproof powder, a waterproof yarn, and a waterproof tape, or a combination thereof. The structure of the waterproof conductor 2 is divided into an inner layer and an outer layer. For example, as shown in FIG. 2 to FIG. 4, three different structures of the waterproof conductor are listed. In FIG. 2, an inner-layer compacted round conductor 21 and an outer-layer T-shaped conductor 201 (i.e., a trapezoidal stranded conductor) are provided in sequence outside the optical fiber unit 1. In FIG. 3, the inner-layer compacted round conductor 21 and an outer-layer SZ-type conductor 202 are provided in sequence outside the optical fiber unit 1. In FIG. 4, the inner-layer compacted round conductor 21 and an outer-layer segmented conductor 203 are provided in sequence outside the optical fiber unit 1.

Optionally, the material of the waterproof conductor 2 may be one or more of copper, tinned copper, aluminum, or an aluminum alloy.

A conductor shield layer 3 is provided outside the waterproof conductor 2. The conductor shield layer 3 is coated with an insulation layer 4. The insulation layer 4 may use an existing insulation material in the prior art, such as cross-linked polyethylene or ethylene-propylene rubber. However, the maximum allowable operating temperature of existing cross-linked polyethylene insulation materials is 90 °C. Since the current-carrying capacity of submarine cables is directly related to the maximum operating temperature of conductors, the thermal resistance of the existing insulation material limits the transmission capacity of submarine cables to a certain extent.

Therefore, the insulation layer 4 may be prepared by using the insulation materials provided by the foregoing embodiments 1-3. This material before aging exhibits the following performances: tensile strength ≥ 17 Mpa, elongation at break ≥ 500%, volume resistivity (23°C) ≥ 1.0 × 10¹⁶ Ω•m, dielectric constant ≤ 2.3-2.35, dielectric loss-angle tangent tgδ ∈ (0.0005, 0.001), short-time power frequency breakdown strength (23°C) ≥ 40kV/mm, and melt flow rate (190°C/2.16kg) being between 0.7-1.1.

Optionally, when the melt flow rate is 0.95, the performance is better.

An extruded insulation shield layer 5 is provided outside the insulation layer 4; and the conductor shield layer 3, the insulation layer 4 and the insulation shield layer 5 are extruded at one time by a three-layer co-extrusion process. For example, the conductor shield layer 3 and the insulation shield layer 5 are made of ethylene-vinyl acetate copolymer and carbon black, while a heat-resistant vulcanizing agent is added to the materials.

Optionally, the three-layer co-extrusion process is as follows.

A conductor core is subjected to induction heating, and the heating temperature range is 70-120°C. Optionally, the pre-heating temperature is 110°C, and the post-heating temperature is 80°C. By detecting the surface temperature of the conductor, if the detected temperature is within the set range, the requirements are met and the machine may be turned on for extrusion molding.

The conductor shield layer, the insulation layer and the insulation shield layer are sequentially extruded on the surface of the conductor core by use of the three-layer co-extrusion process, forming an insulation core of cable. The temperature of the extruder is set as follows.

**Table 2: Temperature setting of extruder**

| | Zone 1 | Zone 2 | Zone 3 | Zone 4 | Zone 5 | Zone 6 | Zone 7 | Extruder neck | Glue-guide tube 1 | Glue-guide tube 2 |
|---|---|---|---|---|---|---|---|---|---|---|
| Extruder for insulation layer | 121 | 123 | 122 | 122 | 122 | 122 | 122 | 122 | 126 | 126 |
| Extruder for conductor shield layer | 96 | 99 | 102 | 104 | / | / | / | 100 | 102 | 104 |
| Extruder for insulation shield layer | 96 | 117 | 124 | 125 | / | / | / | 126 | 126 | 126 |

Where, the conductor shield layer and the insulation shield layer are each a combination of sieves of 40-mesh/80-mesh/150-mesh/200-mesh/80-mesh/40-mesh; the insulation layer is a combination of sieves of 20-mesh/80-mesh/200-mesh/400-mesh/80-mesh/20-mesh.

Due to the thermal resistance of the insulation material, the die sizing formula is set as follows.

Die core: D1 = Conductor outer diameter + (0.6-1.8) mm, where the coefficient is slightly different between the compacted round conductor and the profiled conductor; the profiled conductor has a larger outer diameter and its surface roundness control process is not as good as that of compacted round conductor; and to avoid die jamming, the coefficient of the profiled conductor will be set slightly higher than that of the compacted round conductor.

Liner die: D2 = Inner-shielding-layer outer diameter + (0.1-1.2) mm, where increased coefficients are different for VCV and CCV, and when the VCV is used for production, the insulation layer thickness is slightly large, requiring a larger coefficient than CCV.

Die sleeve: D3 = Conductor diameter + 2 × Inner-shielding-layer thickness + 2 × insulation layer thickness × (1.1-1.2) + 2 × Outer-shielding-layer thickness.

The insulation core of cable is cross-linked in a cross-linked pipeline with a temperature of 200-300°C under a nitrogen pressure of more than 10Mpa, and the maximum surface temperature of the insulation shield layer is controlled below 250°C to prevent scorching.

A waterproof layer 6 is provided outside the insulation shield layer 5. The waterproof layer 6 is a semiconductor waterproof tape, which may be a single-sided waterproof tape, a double-sided waterproof tape or a combination thereof.

A metallic shield layer 7 is provided outside the waterproof layer 6. The metallic shield layer 7 may be one of a lead alloy sheath, a copper tape, a copper wire and a copper pipe, or a combination thereof.

A non-metallic sheath layer 8 is provided outside the metallic shield layer 7. The non-metallic sheath layer 8 is one of a semi-conductive PE sheath and an insulating PE sheath.

Optionally, in submarine cables, a cooling device 9 is provided outside the optical fiber unit 1 and multiple layers of materials coated outside the optical fiber unit 1, so that the system may be automatically cooled when the temperature of the cables is greater than 75°C. Cooling methods include but are not limited to liquid nitrogen cooling.

Optionally, in submarine cables, outside the optical fiber unit 1 and the multiple layers of materials coated thereon, there is a filling layer 10 outside the cooling device 9. The filling layer 10 is a conventional filling material, such as polyethylene foam, polyurethane foam or silica gel, and may be a filling strip or a filling rope. The cooling device 9 may be a cooling liquid pipeline, an inert gas cooling pipeline or a magnetic cooling device.

Optionally, the outer coating layer of the submarine cable is integrally composed of a wrapping tape layer 11, an inner cushion layer 12, an armoring layer 13 and an outer cladding layer 14. The wrapping tape layer 11 is a gummed cotton tape or an eco-friendly cotton tape. The inner cushion layer 12 is made of a polypropylene (PP) material. The armoring layer 13 may be a galvanized steel wire, a hard-drawn copper wire, a stainless steel wire or an aluminum alloy wire. The outer cladding layer 14 may be made of a polypropylene (PP) material.

### Embodiment 3

Based on the submarine cables provided by Embodiment 2, this embodiment verifies the performances of the submarine cables prepared by using different insulation layer materials. Specifically, experimental groups and control groups are established as follows. The experimental groups 1-1 to 1-3 respectively use the insulation materials 1-1 to 1-3 in Embodiment 1. The experimental groups 2-1 to 2-3 respectively use the insulation materials 2-1 to 2-3 in Embodiment 1. The experimental groups 3-1 to 3-3 respectively use the insulation materials 3-1 to 3-3 of Embodiment 1. The experimental groups 4-1 to 4-3 respectively use the insulation materials 4-1 to 4-3 of Embodiment 1. The experimental group 5 uses the insulation material 5 of Embodiment 1. The control groups 1-4 and 1-5 respectively use the comparative materials 1-4 and 1-5 of Embodiment 1. The control groups 2-4 and 2-5 respectively use the comparative materials 2-4 and 2-5 of Embodiment 1. The control group 3-4 uses the comparative material 3-4 of Embodiment 1. The control groups 4-4 uses the comparative material 4-4 of Embodiment 1.

The remaining materials are selected as follows: the optical fiber unit 1 is a single-mode optical fiber; the waterproof conductor 2 is a copper conductor; the conductor shield layer 3 and the insulation shield layer 5 are cross-linkable semi-conductive shield layers made of ethylene-vinyl acetate copolymer added with carbon black; the waterproof layer 6 is a semi-conductive waterproof tape; the metallic shield layer 7 is a lead alloy sleeve; the non-metallic sheath layer 8 is a semi-conductive PE sheath; the cooling device 9 is a magnetic cooling device; the filling layer 10 is a filling strip; the wrapping tape 11 is an eco-friendly cotton tape; the inner cushion layer 12 is made of polypropylene; the armoring layer 13 is made of galvanized steel wires; and the outer cladding layer 14 is made of polypropylene.

For the above experimental groups and control groups, the following electrical performance test 1 is conducted.

Thermal Cycling Voltage Test: Each cycle includes at least 8 h of heating and at least 16 h of natural cooling. The temperature of the conductor heated by current reaches 105°C - 110°C. In each thermal cycle, the temperature of the conductor needs to be kept at 105°C -110°C for at least 2 h. The heating and cooling cycles needs to be conducted for 20 times. A voltage of 2U0 kV (rated voltage) is applied to the test samples during the entire test period, and no breakdown occurs during testing.

The following electrical performance test 2 is further conducted.

Partial Discharge Test: the partial discharge test is carried out for the core of cable which has been subjected to the thermal cycling voltage test. The test environment is as follows: (20 ± 15)°C; and the sensitivity of the partial discharge test is 5 pC or better. The test voltage is gradually increased to 1.75 U₀ and decreased to 1.5 U₀ after keeping for 10s. There is no measurable discharge exceeding declared sensitivity during testing.

The results of the electrical performance test are shown in the following table.

**Table 3: Test results of electrical performance**

| Example | Thermal cycling voltage test | Voltage withstand test |
|---|---|---|
| Experimental group 1-1 | No breakdown | No discharge exceeding declared sensitivity |
| Experimental group 1-2 | No breakdown | No discharge exceeding declared sensitivity |
| Experimental group 1-3 | No breakdown | No discharge exceeding declared sensitivity |
| Control group 1-4 | Breakdown at thermal cycle 15 | / |
| Control group 1-5 | Breakdown at thermal cycle 12 | Amount of partial discharge 9pC |
| Experimental group 2-1 | No breakdown | No discharge exceeding declared sensitivity |
| Experimental group 2-2 | No breakdown | No discharge exceeding declared sensitivity |
| Experimental group 2-3 | No breakdown | No discharge exceeding declared sensitivity |
| Control group 2-4 | No breakdown | Amount of partial discharge 12pC |
| Control group 2-5 | No breakdown | Amount of partial discharge 9pC |
| Experimental group 3-1 | No breakdown | No discharge exceeding declared sensitivity |
| Experimental group 3-2 | No breakdown | No discharge exceeding declared sensitivity |
| Experimental group 3-3 | No breakdown | No discharge exceeding declared sensitivity |
| Control group 3-4 | Breakdown at thermal cycle 14 | / |
| Experimental group 4-1 | No breakdown | No discharge exceeding declared sensitivity |
| Experimental group 4-2 | No breakdown | No discharge exceeding declared sensitivity |
| Experimental group 4-3 | No breakdown | No discharge exceeding declared sensitivity |
| Control group 4-4 | Breakdown at thermal cycle 18 | No discharge exceeding declared sensitivity |
| Experimental group 5 | No breakdown | No discharge exceeding declared sensitivity |

The above merely describes specific embodiments of the present application, but the protection scope of the present application is not limited thereto. Any person who is familiar with the art may easily conceive of variations or substitutions within the technology scope disclosed by the present application, which shall be covered by the protection scope of the present application. Therefore, the protection scope of the present application shall be subjected to the protection scope of the claims.

## Claims

1. An insulation material, comprising: polyethylene, a vulcanizing agent, and an antioxidant, wherein
the vulcanizing agent is dicumyl peroxide;
the antioxidant is pentaerythritol tetraester;
a mass ratio of the polyethylene, the vulcanizing agent and the antioxidant is 100: (0.8-2.5): (0.1-0.4).

2. The insulation material according to claim 1, wherein the polyethylene is linear low-density polyethylene, and the polyethylene in the insulation material has a proportion of 100 parts.

3. The insulation material according to claim 1, wherein the antioxidant is pentaerythritol tetraester 1010 or pentaerythritol tetraester 1035.

4. The insulation material according to any one of claims 1 to 3, further comprising: an antiscorching agent and a plasticizer.

5. The insulation material according to claim 4, comprising, in parts by weight:
100 parts of the polyethylene, 0.8-2.5 parts of the vulcanizing agent, 0.1-0.4 parts of the antioxidant, 0.4-1.2 parts of the antiscorching agent and 0.8-2 parts of the plasticizer.

6. A submarine cable, wherein the submarine cable uses the insulation material according to any one of claims 1 to 5 as an insulation layer.

7. A submarine cable, comprising an optical fiber unit and a conductor, wherein the optical fiber unit is coated with the conductor.

8. The submarine cable according to claim 7, wherein the conductor comprises an inner-layer conductor and an outer-layer conductor, and the outer-layer conductor is one or more of a trapezoidal stranded conductor, a SZ-type stranded conductor or a segmented stranded conductor.

9. The submarine cable according to claim 7 or 8, further comprising a cooling device and a filling material, wherein the cooling device is provided between the filling material.

10. Use of the insulation material according to any one of claims 1 to 5 in improving an operating temperature of a submarine cable.

11. Use of the submarine cable according to any one of claims 7 to 9 in improving an accuracy of fault location or an accuracy of operating temperature detection.
